# EUROPEAN PATENT SPECIFICATION

(11) **EP 0 281 106 B1**
(45) Date of publication and mention of the grant of the patent: **01.06.1994**
(21) Application number: 88103179.3
(22) Date of filing: 02.03.1988
(51) Int. Cl.: G07G 1/12, G07G 3/00

(54) **Electronic cash register**
Elektronische Registrierkasse
Caisse enregistreuse électronique

(30) Priority: 03.03.1987 JP 31611/87 U
(43) Date of publication of application: 07.09.1988
(73) Proprietor: SHARP KABUSHIKI KAISHA, Osaka 545 (JP)
(72) Inventor: Komai, Kensaku, Yamatokoriyama-shi Nara-ken (JP); Imanishi, Yoshiaki, Paramus New Jersey 07652 (US)
(74) Representative: TER MEER STEINMEISTER & PARTNER GbR

(56) References cited:
- EP-A- 0 157 743
- US-A- 4 142 235
- PATENT ABSTRACTS OF JAPAN, vol. 6, no. 188 (P-144)[1066], 28th September 1982; & JP-A-57 100 556
- PATENT ABSTRACTS OF JAPAN, vol. 7, no. 176 (P-214)[1321], 4th August 1983; & JP-A-58 80 764

## Description

### BACKGROUND OF THE INVENTION

This invention relates to an electronic cash register comprising input means operable by an operator including numeric keys to enter the numerical information such as a price and function keys to enter a variety of transaction information; internal processing means to process the numerical information entered by said input means; output means to deliver numerical information entered by said input means or numerical information processed by said internal processing means; a first memory to store the cumulative total values of the numerical information occuring from various transactions; and a drawer to keep and store the cash, which is opened by an open command signal sent from said internal processing means at the end of various transactions.

US-A-4,142,235 shows an electronic cash register with all features of the preamble part of claim 1. The electronic cash register disclosed in that document is further provided with a detection device and a receipt cutting device. The detection device detects the drawer-shutting and thus actuates the receipt cutting device when the drawer is shut.

Patent abstracts of Japan-Vol. 6 No. 188 (P-144) (1066) September 28, 1982 & JP-A 57-100556 discloses a detecting system for detecting the actual time when the drawer is opened. A time circuit stores the present time data when the drawer is opened and printing/displaying means prints or displays the opening time. There is no control how long the drawer is opened. Therefore the electronic cash register with such on detecting systems had a poor preventive effect against crimes of operators.

### SUMMARY OF THE INVENTION

It is hence a primary object of this invention to present an improved electronic cash register which enhances the preventive effect against the crimes of the operators.

In accordance with the present invention, there is provided an electronic cash register comprising timer means to start clocking in response to said open command signal of the drawer and to stop said clocking action in relation to the closing action of the drawer; a second memory with memory areas allocated to the operators to store a time opening period information related to the respective operator corresponding to the measured period by said timer means according to the clocking action of said timer means.

To describe another embodiment of the present invention, an electronic cash register comprises a display unit and a printer to deliver the entered or internally processed numerical information, a counting circuit to count up every time said timer clocks a specified time, and a count keeping memory to register and keep the count of said counting circuit when said timer stops its clocking action and also to deliver the kept data to said printer when resetting or reading.

Accordingly, in an electronic cash register of the present invention, when an operator presses a tender key to command the end of a transaction after registering a variety of transaction information, an open command signal to open the drawer is delivered from the internal processing unit and the drawer opens, and at the same time, the timer is driven to start clocking action in response to said open command signal. And every time the timer clocks a specified time, for example, thirty seconds, the counter counts up by one

When payment and receipt of the cash related to the transaction are over, the operator closes the drawer. It follows that the clocking action of said timer is stopped by the closing action, and the count of the counter at the time is registered in the memory. As a result, when resetting and reading of said register are carried out afterward, the counts in said memory are delivered to the printer, so that the opening status of the drawer can be checked by said counts.

A preventive effect against crimes of the operators is consequently exerted because the opening status of the drawer at every transaction can be recorded and checked, that is, the opening period of the drawer can be monitored.

### Brief Description of the Drawings

The present invention will become more fully understood from the detailed description given hereinbelow and the accompanying drawings which are given by way of illustration only, and thus are not limitative of the present invention and wherein:
Fig. 1 is a perspective view showing the appearance of an electronic cash register according to the present invention;
Fig. 2 is a block diagram showing a control structure of the electronic cash register of this invention; and
Fig. 3 is a flowchart showing the operations of the electronic cash register of this invention.

### Detailed Description of the Embodiment

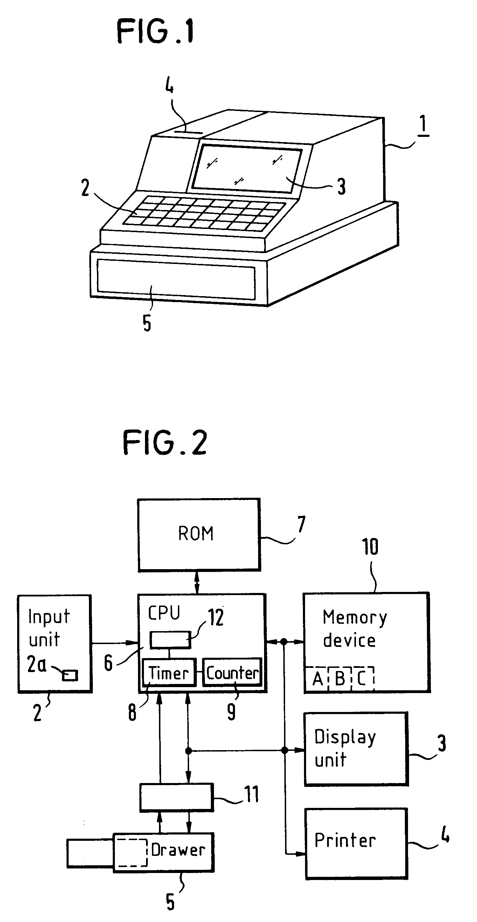

Fig. 1 is an outline view of an electronic cash register of an embodiment according to the present invention, in which numeral 1 is a cash register main body, 2 is an input unit including numeric keys to enter numerical information such as price and function keys to enter a variety of transaction information, which is installed on a front face of said main body 1, 3 is a display unit to deliver the input information from said input unit 2 and numerical information processed in an internal processing unit shown in Fig. 2, 4 is a printer to issue receipts and journal corresponding to each transaction, and 5 is a drawer to keep and store cash and others, which is opened in response to an open command signal from the internal processing unit after the end of the transaction. The input unit 2 is equipped also with a tender key to specify the end of a transaction and a key to register the operators (clerks) who operate the cash register.

Next, Fig. 2 is a block diagram showing a control structure of the register and in Fig. 2, identical parts in Fig. 1 are shown by identical reference numerals respectively.

In Fig. 2, numeral 6 is an internal processing unit (CPU) to process the information entered from the input unit 2 according to programs preliminarily stored in ROM 7, and the CPU 6 includes a timer 8 to clock the opening period of the drawer 5 and a counter 9 to count up by one at every desired period in this timer 8. Besides, the CPU 6 calculates or transfers entered numerical information signals.

Numeral 10 is a memory device (RAM) to store data processed in the CPU 6, that is, cumulative values of numerical information such as prices occurring in a variety of transactions, and the memory device 10 is composed of certain areas to store opening status information of the drawer 5, that is to say, memory areas A, B, C ... to keep counts in said counter 9. These memory areas A, B, C ... are allocated to the clerks (A, B, C ...) of the register respectively.

Numeral 11 is an opening control unit of the drawer 5, which opens the drawer 5 responding to the open command signal, from the CPU 6 and also sends a close command signal to the CPU 6 side when the drawer is closed.

In the ROM 7, programs to sum up numerical information such as price on each transaction, or the like and preliminarily stored, and the contents of the ROM 7 are indentical to those in conventional electronic cash registers.

The CPU 6 is also equipped with an input discriminating circuit 12 to judge the signals entered from the input unit, and when a key to specify an end of various transactions 2a, for example, a tender key such as a total or amount tender key, is judged to be pushed by the discriminating circuit, the CPU 6 starts the closing operation of the transaction and at the same time delivers a drawer open command to a drawer control unit 11. The drawer control part 11, upon receiving the signal, automatically opens the drawer 5. On the other hand, the CPU 6 delivers operation start signals to the timer 8 and the counter 9 simultaneously with the output of the drawer open command signal. Responding to the operation start signals, the timer 8 starts clocking and the counter 9 counts up by one at every desired period clocked by the timer 8. At this point, the operation start signal is delivered synchronously with the drawer open command signal. If the key 2a to specify the end of transactions is not judged to be pressed in the discriminating circuit 12, neither drawer open command signal nor operation start signal is delivered from the CPU 6.

To close the drawer 5, to the contrary, the drawer 5 is closed when it is pressed up to the closing position by the clerk (operator) of the cash register, and when the closing action finishes, the drawer opening control unit 11 transfers a closed signal to the CPU 6. By receiving the closed signal, the timer 8 is reset to put an end to the clocking action. The count of the counter 9 is stored in a memory area for the present clerk (operator) in the memory device 10. Then the content of the counter 9 is reset.

In the memory device (RAM) 10, cumulative values of the numerical information such as price appearing in each transaction are stored, but in addition, it is also possible to store the transaction data on each transaction, that is, all of the numerical information occurring in the transaction such as prices.

Referring to the selection of the memory area for storing the calculated values of the counter 9 of the memory device (RAM) 10, a memory area is specified for each clerk (operator) when an operator preliminarily enters his or her code number or presses an operator register key from the input unit 2 at the beginning of using the cash register.

On the display unit 3, numerical information entered by the clerk (operator) of the cash register such as prices and cumulative values of the numerical information are displayed at every transaction.

The printer 4 is used to issue receipts and journal corresponding to the transaction. For example, numerical information such as prices is printed out every time the clerk (operator) enters the information. And when the operator specifies the end of the transaction in order to pay or receive the cash with the customer by operating, for example, a tender key such as a total or amount tender key, the total is calculated by the CPU 6 and the cumulative numerical value information is printed out. In such a way, receipt and journal corresponding to a transaction are issued.

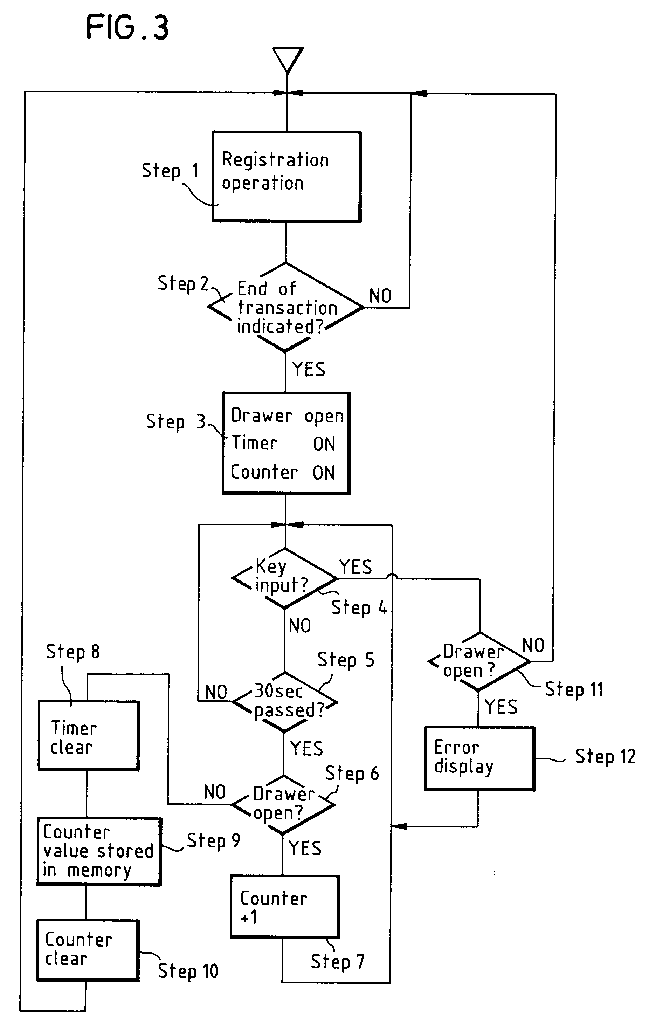

Fig. 3 is a flowchart showing practical operations of Fig. 2, and the operation of the cash register of this invention are explained by referring to Fig. 3. The registering operation of various transactions are carried out through the input unit 2, CPU 6, memory device 10, and display unit 3, and as they are similar to those required in general cash registers, their explanation is omitted here.

It is assumed here that clerk (operator) A to use the cash register preliminarily registers the operator A, and that the memory area A in the memory device 10 is specified. When a series of transaction entries of a customer ends and the operator (A) specifies the end of the transaction, for example, operates the tender key such as a total or amount tender key, the instruction is sent from the input unit 2 to the CPU 6 and the CPU 6 calculates the total of the transaction and also delivers the open command signal to the opening control unit 11 of the drawer 5. The timer 8 in the CPU 6 is additionally driven to start clocking in response to the output of the open command signal.

The opening control unit 11 opens the drawer 5 responding to the open command signal, while said timer 8 starts clocking synchronously with the opening of the drawer 5.

The timer 8 delivers a signal to the counter 9 every time the desired period, for example, thirty seconds is counted and the counter 9 counts up by one.

On the other hand, when the payment of the cash by the customer ends, the operator A closes the drawer 5. When the drawer is closed, the opening control unit 11 delivers the closed signal to show that the drawer 5 is closed to the CPU 6, the CPU 6 sequentially clears the timer 8 responding to the closed signal, terminates the clocking action, and at the same time, registers the count of the counter 9 in the memory area A in the memory device 10, and clears the data in the counter 9.

In this memory area A, the opening status information showing how long the operator A opens the drawer 5 at each transaction is kept and sorted one after another.

Describing further in details, in step 1, a series of transaction entries for a customer is carried out and when the transaction registration ends, the operator (A) operates the key 2a to specify the end of the transaction.

In step 2, whether the key 2a to specify the end of the transaction is operated or not is judged and if it is judged not to be operated, the transaction registration in step 1 is resumed. If the key 2a to specify the end of the transaction is judged to be operated, the operation advances to step 3, where the CPU 6 delivers an open command signal to the drawer opening control unit 11 and furthermore delivers the action start signals to the timer 8 and the counter 9 synchronously with the command signal. The drawer opening control unit 11 opens the drawer 5 in response to the open command signal.

The timer 5 clocks responding to the operation start signal and delivers a signal to the counter 9 every time the desired period, for example, thirty seconds is measured to let the counter 9 count up by one (steps 5, 7).

In step 4, whether any key is entered after the drawer 5 opens or not is judged by the input discriminating circuit in the CPU 6, and if any input is found, the opening status of the drawer 5 is checked again in step 11. When the drawer 5 is judged to be closed at step 11, the operation returns to the transaction entry in step 1. To the contrary, when the drawer 5 is judged to be opened, an error message (key input error) is displayed and the operation returns to step 4.

If no key is judged to be entered at step 4, the operation advances to step 5, where the CPU 6 judges whether the desired period (30 seconds in this embodiment) passes or not after the timer 8 has started clocking.

In step 6, whether the drawer 5 is closed after the timer has started clocking or not is judged by the drawer control unit 11.

In step 7, if the drawer 5 is still open when the desired period (for example, 30 seconds) passes by the clocking of the timer 8, the timer 8 delivers a signal to let the counter 9 count up by one.

When the drawer 5 is judged to be closed in step 6, the operation advances to step 8, where the timer 8 is cleared. The count of the counter 9 is, sequentially in step 9, stored in the memory area A for the present clerk (operator) A. When the storing ends, the data in the counter 9 is reset in step 10.

The information kept in each memory area such as said memory areas A, B and C is delivered and printed at the printer 4 on a receipt and journal at the time of reset or read. By referring to the delivered record, the opening period status of the drawer in transaction operation on each operator can be checked.

In delivering the information kept in the memory areas A, B, C, the content on each transaction and the information in the memory area at that time may be delivered in pair when reading or resetting the cash register.

Furthermore, it may be designed to give an alarm outside or to shut the drawer automatically when the count of the counter 9 reaches or exceeds a desired value.

As described above, the electronic cash register of this embodiment comprises a drawer to keep and store the cash, which is opened by an open command signal delivered from an internal processing unit after a transaction, a timer to start clocking in response to the open command of the drawer and to stop the clocking action in relation to the closing action of the drawer, a counting circuit to count up every time said timer clocks a specified time, and a count keeping memory to register and keep the count of the counting circuit when the timer stops its clocking action and also to deliver the kept data to the printer when resetting or reading.

In the above electronic cash register, when an operator presses a tender key to command the end of a transaction after registering a variety of transaction information, an open command signal to open the drawer is delivered from the internal processing unit and the drawer opens, and at the same time, the timer is driven to start clocking action in response to the open command signal. And every time the timer clocks a specified time, for example, thirty seconds, the counter counts by one.

When payment and receipt of the cash related to the transaction are over, the operator closes the drawer. It follows that the clocking action of said timer is stopped by the closing action, and the count of the counter at the time is registered in the memory. As a result, when resetting and reading of the register are carried out afterward, the counts in the memory are delivered to the printer, so that the opening status of the drawer can be checked by the counts.

In this invention, the opening status of the drawer 5 is recorded by using the timer 8 and the counter 9, but it is also possible to measure the opening period of the drawer 5, to store time information corresponding to the opening period in the memory and to deliver then whenever they are required. Or it may be also designed to measure the period that the drawer is open and to store the opening period of the drawer.

As explained above, in the electronic cash register according to this invention, the opening status of the drawer at every transaction can be recorded to be checked, that is to say, the opening period of the drawer can be monitored, so that a preventive effect against crimes of operators can be exerted.

## Claims

1. An electronic cash register comprising:
- input means (2) operable by an operator (A, B, C, ...) including numeric keys to enter numerical information such as a price and function keys to enter a variety of transaction information;
- internal processing means (6) to process the numerical information entered by said input means (2);
- output means (3, 4) to deliver numerical information entered by said input means (2) or numerical information processed by said internal processing means (6);
- a first memory to store the cumulative total values of the numerical information occuring from various transactions; and
- a drawer (5) to keep and store the cash, which is opened by an open command signal sent from said internal processing means (6) at the end of various transactions;
**characterized by**
- timer means (8) to start clocking in response to said open command signal of the drawer (5) and to stop said clocking action in relation to the closing action of the drawer (5);
- a second memory with memory areas allocated to the operators (A, B, C, ...) to store a time opening period information related to the respective operator corresponding to the measured period by said timer means according to the clocking action of said timer means.

2. An electronic cash register according to claim 1
**characterized by**
- a display unit (3) and a printer (4) to deliver the entered or internally processed numerical information, whereby
- said second memory delivers the stored data at the printer when resetting or reading.

3. An electronic cash register according to claim 1
**characterized by**
- a display unit (3) and a printer (4) to deliver the entered or internally processed numerical information;
- a counting circuit to count up every time said timer means measures a desired period; and
- a count keeping memory to enter and store the count of said counting circuit at the end of the clocking action of said timer means and also to deliver the stored data to said printer when resetting or reading.

## Patentansprüche

1. Elektronische Registrierkasse mit:
- einer Eingabeeinrichtung (2), die von einer Bedienperson (A, B, C, ...) betätigbar ist und Zifferntasten zum Eingeben von Zahleninformation wie einem Preis sowie Funktionstasten zum Eingeben verschiedener Transaktionsinformationen aufweist;
- einer internen Verarbeitungseinrichtung (6) zum Verarbeiten der über die Eingabeeinrichtung (2) eingegebenen Zahleninformation;
- einer Ausgabeeinrichtung (3, 4) zum Ausgeben von über die Eingabeeinrichtung (2) eingegebener Zahleninformation oder von durch die interne Verarbeitungseinrichtung (6) verarbeiteter Zahleninformation;
- einem ersten Speicher zum Abspeichern der Summenwerte der Zahleninformation, wie sie von verschiedenen Transaktionen herrührt; und
- einer Schublade (5) zum Aufbewahren und Lagern von Geld, die durch ein Öffnungsbefehlsignal geöffnet wird, die von der internen Verarbeitungseinrichtung (6) am Ende verschiedener Transaktionen ausgegeben wird;
**gekennzeichnet durch**
- eine Zeitgebereinrichtung (8) zum Starten einer Taktausgabe auf das Öffnungsbefehlsignal für die Schublade (5) hin und zum Beenden der Taktausgabetätigkeit in bezug auf den Schließvorgang der Schublade (5);
- einen zweiten Speicher mit den Bedienpersonen (A, B, C, ...) zugeordneten Speicherbereichen zum Abspeichern von Öffnungszeitspanneninformation in bezug auf eine jeweilige Bedienperson entsprechend der von der Zeitgebereinrichtung gemessenen Zeitspanne gemäß der Taktausgabetätigkeit der Zeitgebereinrichtung.

2. Elektronische Registrierkasse nach Anspruch 1, **gekennzeichnet durch**
- eine Anzeigeeinheit (3) und einen Drucker (4) zum Ausgeben der eingegebenen oder intern verarbeiteten Zahleninformation, wobei
- der zweite Speicher die abgespeicherten Daten beim Rücksetzen oder Auslesen an den Drucker ausgibt.

3. Elektronische Registrierkasse nach Anspruch 1, **gekennzeichnet durch**:
- eine Anzeigeeinheit (3) und einen Drucker (4) zum Ausgeben der eingegebenen oder intern verarbeiteten Zahleninformation;
- eine Zählschaltung zum Hochzählen jedes Mal dann, wenn die Zeitgebereinrichtung eine gewünschte Zeitspanne gemessen hat; und
- einem Speicher zum Aufbewahren des Zählwerte zum Eingeben und Abspeichern des Zählwerts der Zählschaltung mit dem Ende der Taktausgabetätigkeit der Zeitgebereinrichtung, und auch zum Ausgeben des abgespeicherten Datenwerts an den Drucker beim Rücksetzen oder auslesen.

## Revendications

1. Caisse enregistreuse électronique comprenant :
- un organe d'entrée (2) utilisable par un opérateur (A, B, C, ...) comprenant des touches numériques pour rentrer des informations numériques telles qu'un prix et des touches de fonction pour rentrer une variété d'informations transactionnelles ;
- un organe de traitement interne (6) pour traiter les informations numériques rentrées par ledit organe d'entrée (2) ;
- un organe de sortie (3, 4) destiné à fournir des informations numériques rentrées par ledit organe d'entrée (2) ou des informations numériques traitées par ledit organe de traitement interne (6) ;
- une première mémoire destinée à stocker le total des valeurs cumulées des informations numériques provenant des diverses transactions ; et
- un tiroir (5) destiné à conserver et à stocker l'argent liquide, qui s'ouvre au moyen d'un signal de commande d'ouverture envoyé par ledit organe de traitement interne (6) à la fin des diverses transactions ;
caractérisée par
- une horloge (8) pour commencer le chronométrage en réponse audit signal de commande d'ouverture du tiroir (5) et pour arrêter ladite action de chronométrage suite à l'action de fermeture du tiroir (5) ;
- une seconde mémoire avec des zones de mémoire affectées aux opérateurs (A, B, C, ...) pour stocker une information sur la période d'ouverture relative à l'opérateur respectif correspondant à la période mesurée par ladite horloge selon l'action de chronométrage de ladite horloge.

2. Caisse enregistreuse électronique selon la revendication 1 caractérisée par
- une unité d'affichage (3) et une imprimante (4) destinés à fournir les informations numériques rentrées ou traitées de manière interne, au moyen desquels
- ladite seconde mémoire envoie les données stockées à l'imprimante au moment de la remise à zéro ou de la lecture.

3. Caisse enregistreuse électronique selon la revendication 1 caractérisée par
- une unité d'affichage (3) et une imprimante (4) destinés à fournir les informations numériques rentrées ou traitées de manière interne ;
- un circuit de comptage destiné à compter progressivement toutes les fois où ladite horloge mesure une période souhaitée ; et
- une mémoire de sauvegarde des comptes destinée à rentrer et à stocker les comptes dudit circuit de comptage à la fin de l'action de chronométrage de l'horloge et également à envoyer les données stockées à ladite imprimante au moment de la remise à zéro ou de la lecture.
